Europäisches Patentamt

European Patent Office

Office européen des brevets

(11) Numéro de publication: **0 280 671 B1**

## (12) FASCICULE DE BREVET EUROPEEN

(45) Date de publication de fascicule du brevet: **23.06.93**  (51) Int. Cl.5: **B21B 27/00**, B23K 26/08, B44B 3/04

(21) Numéro de dépôt: **88870022.6**

(22) Date de dépôt: **22.02.88**

(54) **Procédé de marquage de la surface d'un cylindre de laminoir, cylindre de laminoir ainsi obtenu et tôle laminée avec un tel cylindre.**

(30) Priorité: **23.02.87 LU 86784**
**19.05.87 BE 8700560**
**14.07.87 BE 8700874**
**24.12.87 BE 8701485**
**11.01.88 BE 8800027**
**13.01.88 BE 8800034**

(43) Date de publication de la demande:
**31.08.88 Bulletin 88/35**

(45) Mention de la délivrance du brevet:
**23.06.93 Bulletin 93/25**

(84) Etats contractants désignés:
**AT DE FR GB IT LU SE**

(56) Documents cités:
**WO-A-87/00937**
**FR-A- 1 564 933**
**FR-A- 2 404 048**
**LU-A- 87 193**

**REVUE DE METALLURGIE, vol. 80, no. 5, mai 1983, pages 393-401; J. CRAHAY et al.: "Gravure de la rugosité des cylindres de laminoir par impulsions laser"**

(73) Titulaire: **CENTRE DE RECHERCHES METAL-LURGIOUES CENTRUM VOOR RESEARCH IN DE METALLURGIE Association sans but lu-cratif**
**Vereniging zonder winstoogmerk Rue Mon-toyer, 47**
**B-1040 Bruxelles(BE)**

(72) Inventeur: **Bragard, Adolphe**
**76, Chemin des Crêtes**
**B-4050 Esneux(BE)**
Inventeur: **Halleux, Jacques**
**29, rue Sur la Carrière**
**B-4546 Richelle(BE)**
Inventeur: **Terreur, Frédéric**
**21, rue Reine Astrid**
**B-4620 Fleron(BE)**
Inventeur: **Defourny, Jacques**
**224, rue Voie des Vaux**
**B-4320 Saint Nicolas(BE)**

EP 0 280 671 B1

(74) Mandataire: **Lacasse, Lucien Emile et al**
**CENTRE DE RECHERCHES METALLURGI-**
**QUES Abbaye du Val-Benoît 11, rue Ernest**
**Solvay**
**B-4000 Liège (BE)**

EP 0 280 671 B1

**Description**

La présente invention concerne un procédé de marquage de la surface d'un cylindre de laminoir, dans le but de conférer à cette surface une rugosité isotrope et durable. L'invention s'étend également à un cylindre dont la surface est marquée au moyen de ce procédé.

Un procédé conforme au préambule de la revendication 1 est connu par la publication "Gravure de la rugosité des cylindres de laminoir par impulsions laser", J. Crahay et al, Revue de Métallurgie-CIT, vol. 80, N[o.] 5, (mai 1983), pp 393-401.

On sait que la rugosité d'un cylindre de laminoir conditionne dans une très large mesure la rugosité des tôles métalliques laminées avec ce cylindre.

Cette rugosité du cylindre est constituée d'une multitude de vallées et de pics microscopiques, qui impriment respectivement des plateaux et des vallées dans la surface de la tôle. La régularité des dimensions et de la répartition de cette rugosité influence en particulier l'aptitude de ces tôles à l'emboutissage et au revêtement.

On connaît déjà, notamment par le brevet BE-A-870.609, un procédé pour créer, au moyen d'un faisceau laser intermittent, une multitude de microcratères dans la surface d'un cylindre de laminoir. Ces microcratères sont entourés d'un bourrelet en relief présentant une dureté élevée. Une tôle laminée avec un tel cylindre présente donc, en surface, une multitude de vallées imprimées par les bourrelets du cylindre, ainsi que des plateaux correspondant aux microcratères.

Dans ce procédé, le cylindre de laminoir est mis en rotation autour de son axe longitudinal et sa surface est frappée par une succession d'impulsions laser produites par hachage d'un faisceau laser continu au moyen d'un disque ajouré. Le faisceau laser se déplace le long du cylindre, de sorte que sa zone d'impact décrit une trajectoire hélicoïdale sur la surface du cylindre.

Le mécanisme de formation d'un tel microcratère est à présent bien connu. On peut rappeler que dans sa zone d'impact sur la surface du cylindre, chaque impulsion laser provoque l'échauffement d'un certain volume de métal et, à l'intérieur de ce volume, la fusion d'une gouttelette du métal du cylindre. Le volume de métal échauffé, ainsi que celui du métal fondu, dépendent de la puissance et de la durée de l'impulsion laser. L'action de l'impulsion laser est généralement renforcée par un jet de gaz oxydant dirigé vers la zone d'impact précitée. La brutale élévation locale de la température provoque la formation d'un plasma au-dessus de la zone d'impact, par combustion du métal. Ce plasma exerce sur le métal fondu une pression qui, combinée à l'effet mécanique du jet de gaz, refoule le métal fondu radialement vers la périphérie de la zone échauffée. Le métal fondu ainsi refoulé, parfois même au-delà de la zone échauffée, forme un bourrelet qui se solidifie très rapidement. La cavité creusée par le refoulement du métal fondu constitue le microcratère.

L'ensemble de ces bourrelets et de ces microcratères détermine la rugosité de la surface du cylindre et par conséquent aussi celle des tôles qui seront laminées avec ce cylindre. La durée de vie des bourrelets conditionne dès lors non seulement la durée de vie du cylindre et la constance de la rugosité des tôles produites mais aussi, par voie de conséquence, la régularité des propriétés de ces tôles notamment en matière d'aptitude à la peinture et de résistance au grippage.

La durée de vie des bourrelets dépend dans une large mesure de leur adhérence à la surface du cylindre. Cette adhérence est à son tour le résultat d'une opération de soudage : si la gouttelette de métal fondu est refoulée trop loin au-delà de la zone échauffée par l'impulsion laser, le bourrelet qui se formera n'adhèrera pas correctement à la surface au cylindre, dont la température est localement trop basse. Il en résultera dès lors une fissure à l'interface entre la surface du cylindre et le bourrelet, conduisant à l'arrachement rapide du bourrelet sous l'effet des forces de laminage. La qualité des tôles laminées se détériore alors et il est nécessaire d'interrompre le laminage pour reconditionner le cylindre. La productivité du laminoir peut en être sérieusement affectée.

Par ailleurs, le procédé du brevet BE-A-870.609 précité assure la formation de microcratères jointifs, de telle sorte que leurs bourrelets dessinent, dans la surface du cylindre, un réseau de crêtes entourant une multitude de dépressions individuelles. Il en résulte qu'une tôle laminée avec un tel cylindre présentera, en surface, un réseau de vallées communicantes qui entourent des plateaux individuels régulièrement répartis.

Ce réseau de vallées assure généralement une bonne circulation et par conséquent une répartition homogène du lubrifiant utilisé par exemple pour une opération d'emboutissage de la tôle. Il est cependant apparu que si la pression de l'outillage devient trop forte, le lubrifiant est refoulé dans le réseau de vallées et il se produit des contacts directs entre le métal de l'outillage et le métal des plateaux de la surface de la tôle. Ceux-ci sont dès lors exposés à l'abrasion et à l'arrachement, ce qui entraîne un risque de dégradation de la surface de la tôle. En outre, l'insuffisance de lubrification accroît le risque de grippage lors de l'emboutissage.

3

Par la publication déjà citée de / J. Crochay et al, il est connu d'utiliser un gaz oxydant lors de la formation de microcratères avec des rebords ou des pourtours annulaires.

La présente invention propose un procédé de marquage de la surface d'un cylindre de laminoir permettant de remédier à ces inconvénients en formant des microcratères qui non seulement présentent une adhérence accrue, et par conséquent une plus longue durée de vie, mais également conduisent à une configuration de la surface de la tôle plus favorable à la lubrification lors de l'emboutissage.

Conformément à la présente invention, un procédé de marquage de la surface d'un cylindre de laminoir, dans lequel on fait tourner ledit cylindre autour de son axe longitudinal et on forme une multitude de microcratères dans la surface dudit cylindre au moyen d'un faisceau laser intermittent et en présence d'un jet de gaz dirigé vers la zone d'impact dudit faisceau laser, chaque microcratère donnant naissance à un bourrelet, est caractérisé en ce que l'on utilise un jet de gaz constitué par un gaz non oxydant et en ce que l'on règle le débit et l'angle d'incidence dudit jet de gaz pour former des microcratères munis d'un bourrelet sur une partie seulement de leur périphérie.

Selon une première variante du procédé de l'invention, le gaz non oxydant est de préférence un gaz réducteur.

Par gaz non oxydant, il faut entendre ici un gaz non oxydant seul ou un mélange de plusieurs gaz non oxydants tels que le dioxyde de carbone, l'hélium, l'argon ou l'azote.

De même, par gaz réducteur il faut entendre ici soit un gaz réducteur pur, tel que l'hydrogène, l'ammoniac, le monoxyde de carbone, l'hydrogène sulfuré, soit un mélange de plusieurs gaz réducteurs, soit encore un mélange d'un ou de plusieurs gaz réducteurs et d'un ou de plusieurs gaz neutres tels que l'azote, l'argon, l'hélium ou leurs mélanges.

Il est en effet apparu que l'utilisation d'un gaz non oxydant, respectivement réducteur, provoquait une augmentation de la température du métal moins forte que l'oxygène; la gouttelette de métal fond également mais elle reste plus visqueuse. Dans ces conditions, le métal fondu forme un bourrelet qui est beaucoup moins étendu que dans le cas de l'oxygène; il est également projeté moins loin hors du microcratère et il reste davantage sur la zone de la surface échauffée par le faisceau laser.

De plus, un tel gaz ne provoque pas d'oxydation de la gouttelette de métal fondu; il n'y a donc pas de couche d'oxyde entre le bourrelet et le cylindre et l'adhérence du bourrelet n'est pas compromise.

En particulier, il est intéressant d'utiliser un mélange gazeux constitué d'azote et de 3 % à 8 % en volume d'hydrogène, la teneur en hydrogène étant de préférence d'environ 5 % en volume.

Une telle teneur d'environ 5 % en volume d'hydrogène permet d'opérer à l'air libre, car cette valeur ne conduit pas à des risques d'explosion en présence d'oxygène.

Il ne sortirait cependant pas du cadre de l'invention d'utiliser des teneurs en hydrogène plus élevées; simplement, il serait alors nécessaire de prendre des précautions particulières, par exemple opérer dans une enceinte étanche à l'air.

Selon une autre variante du procédé de l'invention, on choisit l'orientation du jet de gaz en fonction de la position désirée du bourrelet partiel à la périphérie du microcratère. Cette position pourra être atteinte en réglant de façon appropriée l'orientation en plus du débit et de l'angle d'incidence du jet de gaz.

Dans le cadre de cette variante, le bourrelet partiel peut occuper une position quelconque à la périphérie du microcratère. L'isotropie de la rugosité sera assurée pour autant que le bourrelet partiel occupe la même position pour tous les microcratères.

Il s'est cependant avéré particulièrement intéressant d'orienter ledit jet de gaz suivant une direction sensiblement perpendiculaire à la génératrice dudit cylindre qui passe par ladite zone d'impact.

Par sensiblement perpendiculaire, il faut comprendre que la direction du jet de gaz forme un angle de 10° maximum avec la perpendiculaire à la génératrice considérée du cylindre.

Suivant une mise en oeuvre avantageuse, on injecte ledit gaz dans le sens de la rotation du cylindre.

L'injection de gaz suivant ladite direction sensiblement perpendiculaire permet de former un bourrelet partiel compact et adhérent.

Suivant une autre variante du procédé de l'invention, on donne au rapport L/D entre la dimension L des microcratères, mesurée suivant la périphérie du cylindre, et leur dimension D, mesurée parallèlement à l'axe longitudinal du cylindre, une valeur supérieure à 1.

Le demandeur a en effet constaté, au cours de ses travaux, que l'adhérence des bourrelets pouvait varier dans des proportions appréciables en fonction de la forme des microcratères. Il est apparu à cet égard que les microcratères allongés suivant la périphérie du cylindre conduisaient à des résultats particulièrement intéressants.

L'allongement des microcratères dans la direction désirée est exprimée ici par le facteur de forme constitué par le rapport L/D. Il convient de préciser à cet égard que les dimensions L et D sont mesurées sur le volume de métal fondu par une impulsion laser; ce volume est plus grand que celui de la cavité qui subsiste après la solidification du bourrelet. Pour simplifier, ces dimensions L et D seront désormais appelées respectivement longueur et largeur des microcratères.

Selon une caractéristique particulière du procédé de l'invention, on donne au rapport L/D une valeur inférieure à 5.

Toujours selon l'invention, le rapport L/D est de préférence compris entre 1,1 et 2,5.

L'adhérence du bourrelet, exprimée par l'effort nécessaire pour arracher ce bourrelet, augmente déjà de façon perceptible dès que le rapport L/D est supérieur à 1; cette augmentation devient réellement intéressante en pratique lorsque le rapport L/D atteint et dépasse 1,1. Cette augmentation ne se poursuit cependant pas indéfiniment; dès que le rapport L/D devient supérieur à environ 2,5, le bourrelet est le siège de déformations et celles-ci deviennent inacceptables lorsque le rapport L/D atteint 5.

L'allongement d'un microcratère dans le sens désiré peut être réalisé de différentes manières qui d'une façon générale, conduisent à prolonger la durée d'action de l'impulsion laser sur la surface du cylindre par rapport à la durée d'impulsion qui conduit à des cratères circulaires.

Dans le type de procédé visé par une forme de l'invention, le cylindre à marquer est mis en rotation à une vitesse constante autour de son axe longitudinal, tandis que le faisceau laser intermittent estobtenu par hachage d'un faisceau laser continu au moyen d'un disque rotatif ajouré. Dans la technique actuelle, la largeur circonférentielle des ouvertures pratiquées dans le disque, ainsi que les vitesses de rotation du cylindre et du disque hacheur sont adaptées l'une à l'autre de façon à former des microcratères aussi circulaires que possible.

Pour provoquer l'allongement des microcratères préconisé par la présente invention, on peut notamment diminuer la vitesse de rotation du disque hacheur ou augmenter la largeur circonférentielle des ouvertures du disque hacheur, tout en maintenant inchangée la vitesse de rotation du cylindre. On pourrait aussi augmenter la vitesse de rotation du cylindre sans modifier la vitesse de rotation ou les caractéristiques géométriques du disque hacheur. Il est également possible de combiner plusieurs des modifications précitées.

Il est particulièrement aisé de modifier la vitesse de rotation du disque hacheur. Il en résulte cependant que l'écartement entre deux microcratères successifs augmente également, ce qui entraîne une diminution de la densité de microcratères, suivant la périphérie du cylindre. Une telle modification peut, dans certains cas, exercer un effet défavorable sur la rugosité du cylindre ainsi que sur celle de la tôle laminée avec ce cylindre.

L'élargissement des ouvertures du disque hacheur permet d'assurer l'allongement des microcratères sans diminuer leur densité. Cette opération entraîne un resserrement des microcratères, c'est-à-dire une diminution de la distance entre deux microcratères successifs, sans modifier la distance séparant le début de deux microcratères successifs.

Selon une caractéristique supplémentaire du procédé de l'invention, on réchauffe ledit bourrelet ainsi que la portion de la surface du cylindre sur laquelle ledit bourrelet est déposé, jusqu'à une température suffisante pour provoquer un début de fusion et le soudage dudit bourrelet à ladite portion de la surface du cylindre.

On opère ce réchauffage au moyen d'un second faisceau laser, qui est de préférence obtenu en déviant au moins une partie dudit faisceau laser intermittent.

Dans un autre de ses aspects, la présente invention porte également sur un cylindre de laminoir à rugosité améliorée obtenu par le procédé selon la revendication 1.

La présente invention pourra être mieux comprise grâce à la description de diverses mises en oeuvre préférées, qui est donnée ci-dessous à titre d'exemples et qui se réfère aux dessins annexés, dans lesquels la

figure 1      rappelle le principe connu du procédé de marquage de la surface d'un cylindre de laminoir au moyen d'un faisceau laser intermittent; la

figure 2      représente, en profil et en plan, un microcratère et un bourrelet obtenus avec un jet d'oxygène, suivant la technique antérieure; la

figure 3      montre la position d'un bourrelet obtenu par la technique antérieure; la

figure 4      représente, également en profil et en plan, un microcratère et un bourrelet obtenus avec un jet de dioxyde de carbone ($CO_2$), conformément à une variante de la présente invention; la

figure 5      illustre la forme et la position d'un bourrelet sous l'effet d'une injection longitudinale du gaz; la

figure 6      illustre la forme et la position d'un bourrelet sous l'effet d'une injection transversale du gaz, conformément à une autre variante de la présente invention; la

figure 7      montre la disposition des microcratères résultant d'une diminution de la vitesse de rotation du disque hacheur; la

EP 0 280 671 B1

figure 8        montre la disposition des microcratères résultant d'un élargissement des ouvertures du disque hacheur; la

figure 9        illustre l'opération de refusion au moyen d'un second faisceau laser; la

figure 10       montre, en plan et en coupe, un microcratère et un bourrelet formés dans la surface d'un cylindre conforme à l'invention; et la

figure 11       représente, également en plan et en coupe, le motif imprimé dans la surface d'une tôle d'acier par le microcratère et le bourrelet de la figure 10.

Toutes ces figures constituent bien entendu des représentations schématiques, dans lesquelles on n'a pas reproduit les éléments qui ne sont pas directement nécessaires à la bonne compréhension de l'invention. En outre, des éléments identiques ou analogues sont désignés par les mêmes repères numériques dans toutes les figures.

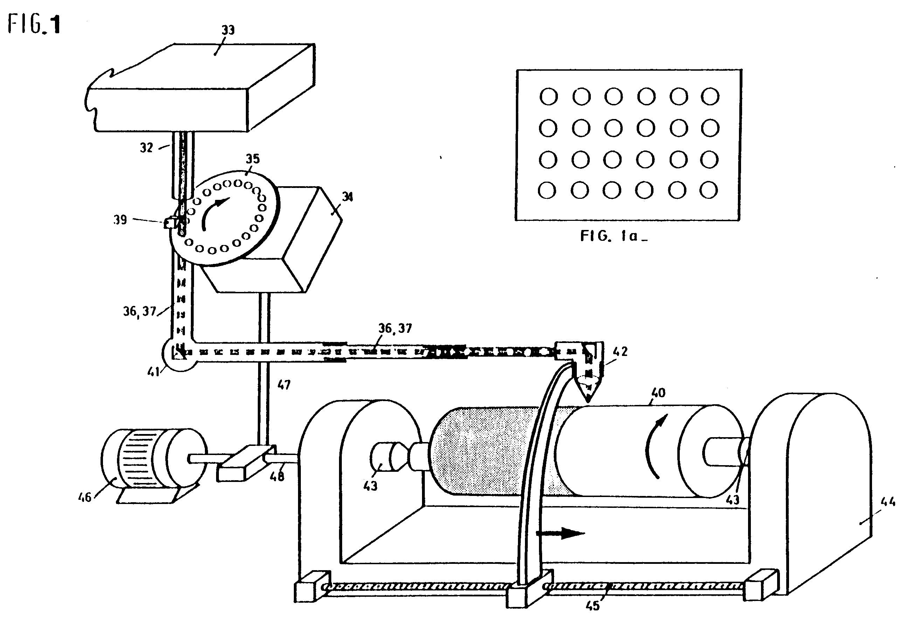

La figure 1 représente schématiquement un dispositif de la technique antérieure destiné à rappeler le principe du procédé de marquage d'un cylindre de laminoir à l'aide d'un faisceau laser intermittent.

Un faisceau laser continu 32, provenant d'un émetteur approprié 33, est rendu intermittent par hachage au moyen d'un disque ajouré 35. Le faisceau laser intermittent 36, 37 est transmis à une tête de marquage 42 qui le dévie vers la surface d'un cylindre de laminoir 40 supporté entre les pointes 43. La tête de marquage 42 est entraînée en translation le long du cylindre 40 par l'intermédiaire d'une vis-mère 45. Le disque hacheur 35, le cylindre 40 et la vis-mère 45 sont entraînés en rotation par un moteur 46, par l'intermédiaire de mécanismes de distribution assurant la synchronisation désirée des divers mouvements.

Dans un disque hacheur usuel tel que 35, la largeur des ouvertures est égale à la distance séparant deux ouvertures voisines. On obtient ainsi une rugosité constituée de microcratères sensiblement circulaires disposés de façon régulière, comme le montre la figure 1a qui est une vue agrandie d'une plage de la surface du cylindre 40, après marquage conventionnel.

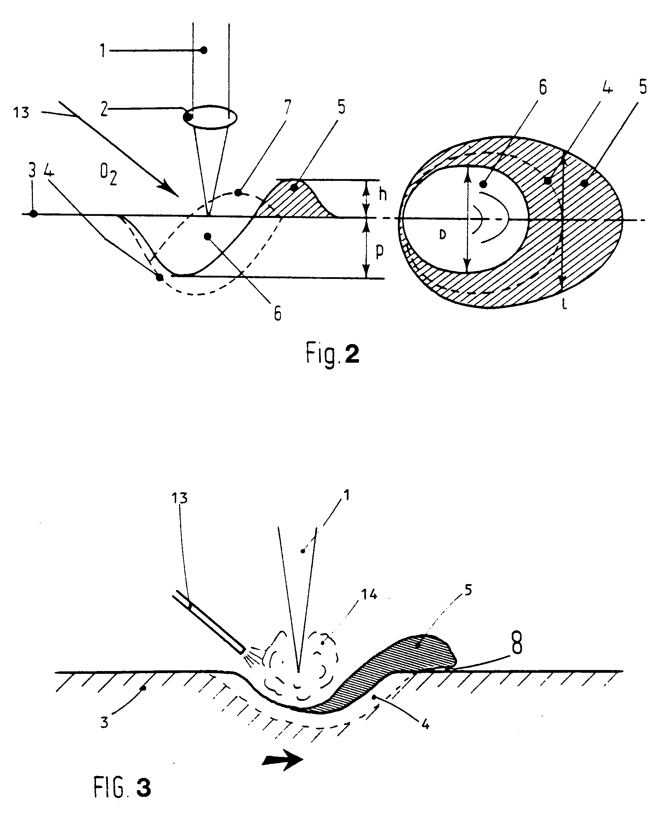

Dans la figure 2, on a représenté schématiquement un microcratère et un bourrelet formés par un faisceau laser intermittent, en présence d'un jet d'oxygène, conformément à la technique antérieure. Le faisceau laser intermittent 1, focalisé par une lentille 2, frappe la surface 3 d'un cylindre de laminoir et provoque la fusion d'une gouttelette de métal délimitée par le trait interrompu 4; au-delà de la surface symbolisée par le trait interrompu 4, le métal est échauffé sur une certaine profondeur, sans atteindre la fusion. Sous l'effet notamment du jet d'oxygène, le métal fondu 4 est partiellement expulsé de son logement et il forme un bourrelet 5 asymétrique qui entoure un microcratère 6. Le trait 7 indique une position intermédiaire de la gouttelette de métal fondu au cours de son mouvement d'expulsion.

Comme le montre plus en détail la figure 3, la surface 3 d'un cylindre de laminoir, tournant autour de son axe dans le sens de la flèche, est frappée par un faisceau laser intermittent 1. L'action de l'impulsion laser renforcée par un jet d'oxygène 13, provoque la fusion d'une gouttelette de métal et la formation d'un plasma très localisé 14. La pression du plasma 14 et le jet d'oxygène 13 refoulent le métal fondu en un bourrelet 5 qui s'étale en partie au-delà de la zone échauffée, sans fusion, par l'impulsion laser. Le bourrelet adhère mal à cette zone plus froide et il se forme une fissure 8 qui favorise l'arrachement du bourrelet pendant le laminage ultérieur.

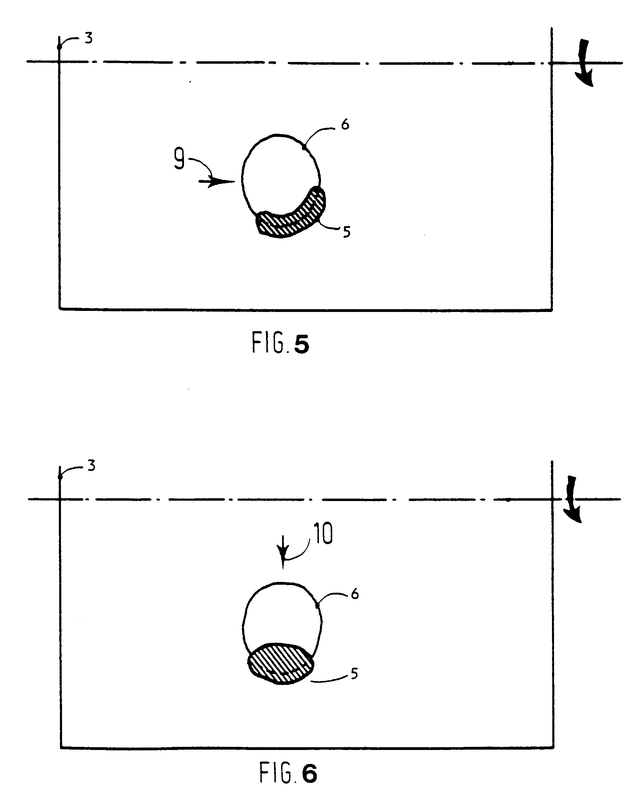

La figure 4 illustre une situation analogue à celle de la figure 2, où le jet d'oxygène a été remplacé par un jet de dioxyde de carbone, toutes les autres conditions de marche étant inchangées. On voit que, dans ce cas, la gouttelette de métal fondu forme un bourrelet 5' qui reste sous forme d'une pastille plus abrupte et beaucoup moins étendue que dans la figure 2. Elle reste en majeure partie au-dessus de la zone fondue 4 où son adhérence est maximale.

Dans les figures 5 et 6, on a illustré la forme et la position du bourrelet par rapport au microcratère, pour les deux orientations 9 et 10 du jet de gaz respectivement. La taille des microcratères et des bourrelets y est fortement exagérée, afin de faire apparaître clairement la différence entre les deux situations.

La figure 5 montre que le bourrelet 5 est assez étendu et qu'il déborde nettement du microcratère 6; de plus, il est déporté vers un côté du microcratère.

La figure 6 montre que, grâce à un jet de gaz 10 orienté conformément à la présente invention, le bourrelet 5 reste symétrique par rapport au microcratère 6. En outre, le bourrelet 5 est ici plus compact et il est bien soudé à la surface du cylindre, car il ne s'étend pratiquement pas au-delà du microcratère.

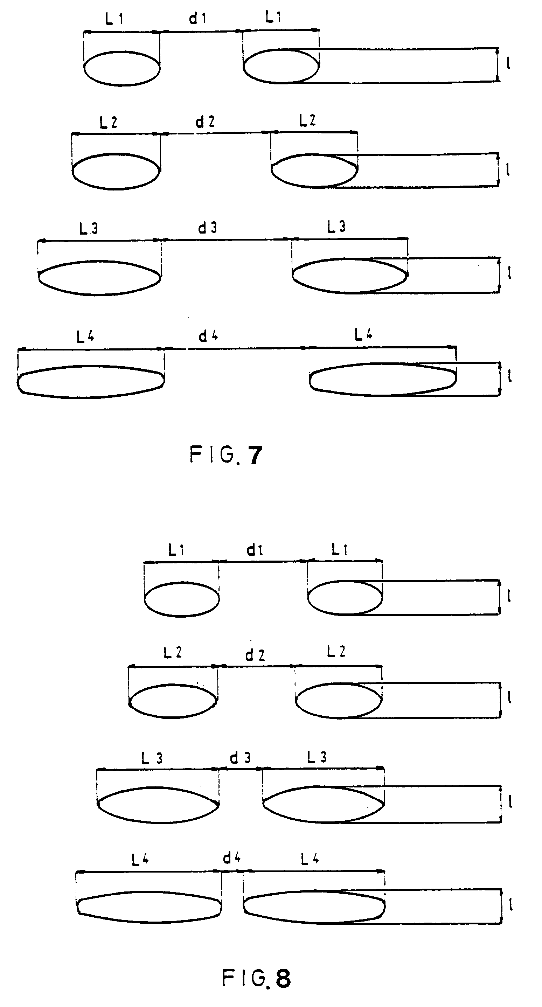

Dans la figure 7, on a représenté la disposition de deux microcratères successifs, dans le sens de la périphérie du cylindre, pour quatre vitesses différentes de rotation du disque hacheur 35 (figure 1). Ces vitesses, repérées $V_1$, $V_2$, $V_3$ et $V_4$ valaient respectivement 2500, 2200, 1900 et 1600 tr/min. Elles entraînent non seulement un allongement croissant des microcratères, mais également un écartement croissant entre ceux-ci.

La figure 8 illustre l'influence de l'élargissement des ouvertures du disque hacheur. Dans le cas présent, cet élargissement est obtenu par une diminution de l'écartement e entre deux ouvertures voisines, ce qui permet de ne pas modifier le nombre de ces ouvertures.

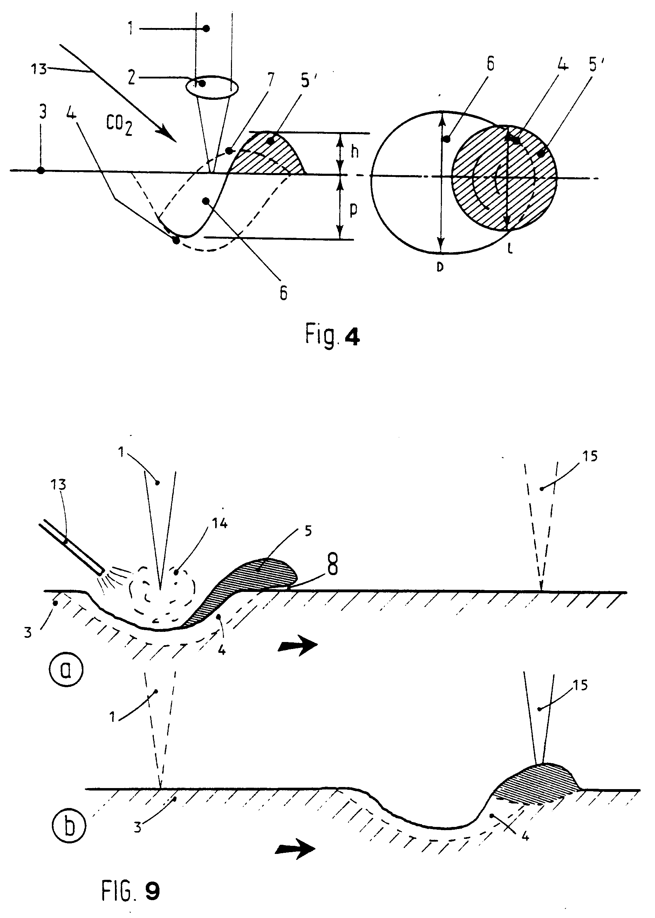

La figure 9 illustre, en deux vues (a) et (b), le procédé de l'invention pour améliorer l'adhérence du bourrelet.

La représentation de la figure 9a est identique à celle de la figure 3, avec cette différence qu'elle comporte un second faisceau laser intermittent 15. Ce dernier est représenté ici en trait interrompu, parce qu'il est lui-même interrompu pendant l'impulsion du premier faisceau laser 1.

Le mouvement de rotation du cylindre 3 étant permanent, le bourrelet 5 arrive au droit du second faisceau laser 15. A ce moment, le premier faisceau laser 1 est interrompu tandis que le second faisceau laser 15 émet une impulsion qui réchauffe le bourrelet 5 et la portion de la surface sur laquelle il repose. Ce réchauffement provoque un début de fusion et le soudage du bourrelet 5 à la surface du cylindre 3, en éliminant la fissure 8. Cette situation est illustrée dans la figure 9b.

Le bourrelet acquiert ainsi une adhérence qui, combinée à une dureté élevée, assure une longue durée de vie au cylindre de laminoir.

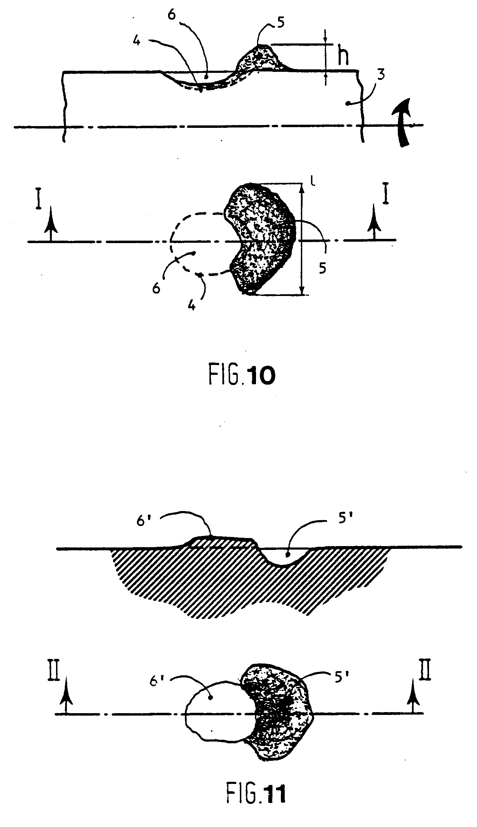

La figure 10 représente schématiquement un microcratère 6 et un bourrelet 5 formés à la surface 3 d'un cylindre de laminoir conforme à l'invention, par un faisceau laser intermittent réglé de manière appropriée. Le cylindre est symbolisé par un axe de rotation, autour duquel il tourne. Sa surface est frappée par un faisceau laser intermittent, dont chaque impulsion provoque la formation d'un microcratère par un mécanisme à présent bien connu. On rappellera simplement qu'à son point d'impact, chaque impulsion provoque l'échauffement d'un certain volume de métal et, à l'intérieur de celui-ci, la fusion d'une gouttelette de métal 4. Ce métal fondu est rejeté radialement vers la périphérie de la zone échauffée, ou éventuellement au-delà de cette zone, où il forme un bourrelet qui se solidifie très rapidement.

Dans le cas présent, les conditions de l'opération sont réglées de telle façon que le métal fondu soit, en majeure partie, rejeté d'un seul côté. On obtient ainsi un bourrelet 5 qui entoure partiellement un microcratère 6. Dans cette figure 10, le trait interrompu 4 marque la limite de la zone fondue. On voit que le métal fondu est rejeté en partie hors de la zone fondue 4. Les conditions sont telles que le métal fondu adhère très bien à la surface chaude, et qu'il n'y a pas de fissure entre le pied du bourrelet 5 et la surface du cylindre. Par conséquent, le bourrelet ne risque pas d'être arraché au cours du laminage d'une tôle.

Pour une puissance du faisceau laser de l'ordre de 1,5 kW, le débit d'oxygène est réglé de telle sorte que le bourrelet s'étende au maximum sur un tiers de la périphérie du microcratère, la largeur 1 du bourrelet étant inférieure à 100 micromètres et sa hauteur h au maximum égale à 30 micromètres. Pour renforcer l'adhérence du bourrelet, 30 % du métal constituant ledit bourrelet doit se situer à l'intérieur du microcratère. Etant donné que cette même opération se répète à chaque microcratère il en résulte que les bourrelets ne sont pas jointifs. La surface du cylindre présente ainsi une multitude de pics 5 séparés par un réseau de vallées dont le fond est essentiellement constitué par l'ensemble des dépressions 6.

Au laminage, un tel microcratère imprime dans la surface d'une tôle le relief représenté schématiquement dans la figure 11 : le creux 5' correspond au bourrelet 5 et le plateau 6' correspond à la dépression 6. La tôle ainsi produite présente une multitude de creux 5' isolés, régulièrement répartis sur la surface de la tôle. Les dimensions de ces creux correspondent sensiblement à celles des bourrelets qui les ont formés.

Lors de l'emboutissage d'une telle tôle, le lubrifiant reste emprisonné dans ces creux d'où il ne peut normalement pas s'échapper. Si la pression de l'outillage sur la tôle est trop forte, la tôle tend à s'allonger et le lubrifiant est partiellement expulsé des creux situés dans la région concernée : il forme ainsi un film lubrifiant à l'endroit critique. Si au contraire, la pression de l'outillage sur la tôle est normale, la tôle glisse en entraînant le lubrifiant; celui-ci n'est donc pas raclé par l'outillage et il peut servir à une passe ultérieure plus critique.

Les creux pratiqués dans la tôle de l'invention peuvent être de très petites dimensions et être très serrés, tout en restant isolés. Le relief de la surface de la tôle devient ainsi très peu prononcé, ce qui contribue à améliorer l'aspect de la tôle après peinture.

Les exemples suivants font apparaître clairement les avantages liés aux différentes variantes du procédé de l'invention qui vient d'être décrit en détail.

Exemple 1 : influence de la nature du gaz injecté.

On a traité la surface d'un cylindre de laminoir au moyen d'un faisceau laser intermittent d'une puissance de 1300 W, en présence d'un débit de gaz de 9 l/min.

On a opéré d'une part avec un jet d'oxygène et d'autre part avec un jet de $CO_2$, toutes les autres conditions étant inchangées.

Le tableau 1 ci-dessous montre que, pour un microcratère pratiquement identique, le bourrelet correspondant au jet de $CO_2$ est plus compact et plus saillant que celui qui est obtenu avec un jet d'oxygène.

TABLEAU 1.

| GAZ | h | l | p | D |
|---|---|---|---|---|
| $O_2$ | 34,3 | 159,4 | 43,2 | 155,5 |
| $CO_2$ | 45,8 | 143,0 | 44,7 | 153,6 |

Toutes les dimensions sont exprimées en micromètres ($\mu$m).

Les symboles utilisés dans ce tableau ont la signification suivante :

h      : hauteur du bourrelet,

l      : largeur du bourrelet à son point le plus haut,

p      : profondeur du microcratère,

D      : largeur du microcratère à son point le plus profond.

Les dimensions correspondantes sont identifiées dans les figures 2 et 4.

Exemple 2 : Influence de l'orientation du jet de gaz.

Pour illustrer l'influence de l'orientation du jet de gaz, on a réalisé des essais comparatifs.

Dans le premier essai, on a opéré avec un faisceau laser de 800 W et un débit de gaz de 6 l/min. Dans le second essai, on a utilisé un faisceau laser de 900 W et un débit de gaz de 12 l/min. Pour chaque essai, le jet de gaz a été orienté successivement suivant les deux positions 9 et 10 représentées respectivement dans les figures 5 et 6; toutes les autres conditions de travail n'ont pas été modifiées.

Dans tous les cas, on a mesuré la hauteur (h) et la largeur (l) du bourrelet à son point le plus élevé, la profondeur (p) et la largeur (D) du microcratère à son point le plus profond, la rugosité arithmétique (Ra) de la surface du cylindre et la force d'arrachement (F) des bourrelets. Les résultats sont rassemblés dans le tableau 2, où les dimensions et la rugosité sont exprimées en micromètres tandis que la force d'arrachement est exprimée en newtons.

TABLEAU 2.

| Essai n° | jet gaz | gaz (l/min) | Puis. (W) | h ($\mu$m) | l ($\mu$m) | p ($\mu$m) | D ($\mu$m) | Ra ($\mu$m) | F (N) |
|---|---|---|---|---|---|---|---|---|---|
| 1 | 9 | 6 | 800 | 15 | 106 | 18 | 96 | 3,5 | 1,0 |
| 1 | 10 | 6 | 800 | 28 | 109 | 37 | 113 | 3,6 | 1,7 |
| 2 | 9 | 12 | 900 | 24 | 121 | 25 | 141 | 5,5 | 1,2 |
| 2 | 10 | 12 | 900 | 45 | 132 | 31 | 123 | 4,9 | 1,9 |

Il apparaît clairement, dans les deux essais, que le passage de l'orientation 9 à l'orientation 10 entraîne une forte augmentation tant de la hauteur du bourrelet (h) que de la profondeur du microcratère (p); les largeurs I et D ne varient pas de façon très marquée. Le bourrelet correspondant à l'orientation 10 présentait la forme illustrée dans la figure 6; il était plus compact et plus saillant que celui de la figure 5.

On observe également que la force d'arrachement F, c'est-à-dire l'adhérence du bourrelet, a augmenté de 60 à 70 % lorsque l'on a changé l'orientation du jet de gaz.

Exemple 3 : Influence du rapport L/D des microcratères.

a) effet de la vitesse de rotation du disque hacheur.

Cet effet est illustré par la figure 7, qui représente la disposition de deux microcratères successifs, dans le sens de la périphérie du cylindre, pour quatre vitesses différentes de rotation du disque hacheur.

On observe que la diminution de cette vitesse de rotation entraîne non seulement un allongement des microcratères, mais également un écartement croissant entre ceux-ci. La densité de microcratères suivant la périphérie, $K_L$, exprimée en nombre de microcratères par pouce, diminue de manière sensible. La largeur des microcratères est, dans tous les cas, de 120 $\mu$m. Le tableau 3 ci-dessous donne les valeurs de la longueur (L), de l'écartement (d), de la densité ($K_L$) et du rapport (L/D) des microcratères formés aux différentes vitesses précitées.

## TABLEAU 3.

| Essai n° | V tr/min | L $\mu$m | L/D | d $\mu$m | $K_L$ nb |
|---|---|---|---|---|---|
| 1 | 2500 | 170 | 1,42 | 113 | 90 |
| 2 | 2200 | 190 | 1,58 | 126 | 80 |
| 3 | 1900 | 220 | 1,83 | 145 | 70 |
| 4 | 1600 | 250 | 2,08 | 169 | 60 |

b) effet de l'écartement des ouvertures du disque hacheur.

Cet effet est illustré dans la figure 8.

Le tableau 4 ci-dessous indique l'influence de la variation de l'écartement e entre deux ouvertures voisines, sur la longueur L et le rapport L/D des microcratères. La largeur D valait également 120 $\mu$m dans tous les cas.

# EP 0 280 671 B1

## TABLEAU 4.

| Essai | e | L | d | L/D |
|---|---|---|---|---|
| n° | mm | µm | µm | |
| 1 | 1,33 | 170 | 113 | 1,42 |
| 2 | 1,10 | 190 | 93 | 1,58 |
| 3 | 0,86 | 210 | 73 | 1,75 |
| 4 | 0,63 | 230 | 53 | 1,92 |

On constate que la diminution de l'écartement e entraîne un resserrement des microcratères qui compense leur allongement et permet de conserver une densité de microcratères ($K_L$) constante, égale à 90 dans le cas présent. Cette constance de la densité de microcratères est favorable pour la régularité de la rugosité du cylindre.

c) effet du rapport L/D sur l'adhérence des bourrelets.

Pour illustrer l'influence de la forme allongée des microcratères sur l'adhérence des bourrelets, on a effectué diverses opérations de marquage d'un cylindre au moyen d'un laser d'une puissance de 800 W et en présence d'un jet d'oxygène ayant un débit de 12 l/min. Pour réaliser l'allongement des microcratères, on a modifié la vitesse de rotation du disque hacheur, ce qui a entraîné une variation de la densité $K_L$ des microcratères dans le sens longitudinal de ceux-ci. Par contre, la densité $K_d$ dans le sens transversal, c'est-à-dire parallèlement à l'axe longitudinal du cylindre, est restée constante.

Outre la longueur L des microcratères, telle qu'elle a été définie plus haut, on a mesuré également la hauteur h et la largeur l des bourrelets ainsi que la profondeur p et la largeur D des cratères après formation des bourrelets.

On a enfin mesuré la rugosité Ra ainsi que l'adhérence des bourrelets. Les résultats obtenus sont rassemblés dans le tableau 5 ci-dessous.

## TABLEAU 5.

| Essai | $K_d$ | $K_L$ | L | h | l | p | D | Ra | L/D | F |
|---|---|---|---|---|---|---|---|---|---|---|
| n° | | | µm | µm | µm | µm | µm | µm | | N |
| a | 90 | 110 | 120 | 29 | 132 | 22 | 115 | 2,6 | 1,04 | 2,0 |
| b | 90 | 90 | 170 | 28 | 121 | 23 | 120 | 2,4 | 1,42 | 2,3 |
| c | 90 | 50 | 270 | 31 | 137 | 21 | 116 | 2,2 | 2,33 | 2,6 |

Ces résultats montrent qu'aussi bien les dimensions des bourrelets que celles des cratères ne subissent pratiquement aucune variation. La rugosité Ra diminue lorsque la vitesse de rotation du disque hacheur diminue, parce que la densité de microcratères ($K_L$) diminue; cette variation de la rugosité n'a cependant aucun effet sur l'adhérence des bourrelets.

10

L'augmentation de la longueur L des microcratères entraîne une augmentation du rapport L/D, qui s'accompagne d'un accroissement sensible de la force d'arrachement F en newton, c'est-à-dire de l'adhérence des bourrelets.

Les bourrelets étant pratiquement inchangés, l'amélioration de l'adhérence est due au fait que ces bourrelets se forment sur la zone échauffée de la surface du cylindre; cet effet est d'autant plus marqué que le microcratère est plus allongé.

Les microcratères ne peuvent cependant pas être allongés indéfiniment car, lorsque le rapport L/D atteint environ 5, une partie du métal fondu du bourrelet reflue vers l'arrière et comble partiellement le microcratère. Le bourrelet résultant est déformé de manière irrégulière.

Il va de soi que la présente invention n'est pas strictement limitée aux exemple de mise en oeuvre qui viennent d'être décrits et illustrés.

**Revendications**

1. Procédé de marquage de la surface d'un cylindre de laminoir, dans lequel on fait tourner ledit cylindre autour de son axe longitudinal et on forme une multitude de microcratères dans la surface (3) dudit cylindre au moyen d'un faisceau laser intermittent (1) et en présence d'un jet de gaz (13) dirigé vers la zone d'impact dudit faisceau laser, chaque microcratère (6) donnant naissance à un bourrelet (5), caractérisé en ce que l'on utilise un jet de gaz (13) constitué par un gaz non oxydant, et en ce que l'on règle le débit et l'angle d'incidence dudit jet de gaz (13) pour former des microcratères (6) munis d'un bourrelet (5) sur une partie seulement de leur périphérie.

2. Procédé de marquage suivant la revendication 1, dans lequel le gaz non oxydant est un gaz réducteur.

3. Procédé de marquage suivant l'une ou l'autre des revendications 1 et 2, caractérisé en ce que l'on oriente ledit jet de gaz suivant une direction sensiblement perpendiculaire à la génératrice dudit cylindre qui passe par ladite zone d'impact.

4. Procédé de marquage suivant la revendication 3, caractérisé en ce que l'on injecte ledit gaz dans le sens de la rotation du cylindre.

5. Procédé de marquage suivant l'une ou l'autre des revendications 1 à 4, caractérisé en ce que l'on donne au rapport L/D entre la dimension L des microcratères, mesurée suivant la périphérie du cylindre, et leur dimension D, mesurée parallèlement à l'axe longitudinal du cylindre, une valeur comprise entre 1 et 5.

6. Procédé de marquage suivant la revendication 5, caractérisé en ce que la valeur du rapport L/D est comprise entre 1,1 et 2,5.

7. Procédé de marquage suivant l'une ou l'autre des revendications 1 à 6, caractérisé en ce que l'on réchauffe ledit bourrelet ainsi que la portion de la surface du cylindre sur laquelle ledit bourrelet est déposé, jusqu'à une température suffisante pour provoquer un début de fusion et le soudage dudit bourrelet à ladite portion de la surface du cylindre.

8. Procédé de marquage suivant la revendication 7, caractérisé en ce que l'on opère ledit réchauffage au moyen d'un second faisceau laser (15), en particulier au moyen d'une partie déviée dudit faisceau laser intermittent (1).

9. Procédé de fabrication d'une tôle d'acier laminée à froid, dans lequel on forme, dans la surface d'au moins un cylindre de laminoir, une multitude de microcratères au moyen d'un faisceau laser intermittent (1) en présence d'un jet de gaz (13) dirigé vers la zone d'impact dudit faisceau laser, chaque microcratère (6) donnant naissance à un bourrelet (5), caractérisé en ce que l'on utilise un jet de gaz constitué par un gaz non oxydant, en ce que l'on règle le débit et l'angle d'incidence dudit jet de gaz pour former des microcratères munis d'un bourrelet sur une partie seulement de leur périphérie, en ce qu'on lamine ladite tôle au moyen dudit cylindre et en ce que l'on forme, dans la surface de la tôle, des creux isolés (5') correspondant aux bourrelets partiels (5) du cylindre et des plateaux (6') correspondant aux microcratères (6) du cylindre.

# EP 0 280 671 B1

**Claims**

1. Method for marking the surface of a rolling-mill roll, in which the said roll is rotated about its longitudinal axis and a multitude of microcraters are formed in the surface (3) of the said roll by means of an intermittent laser beam (1) and in the presence of a jet of gas (13) directed towards the zone of impact of the said laser beam, each microcrater (6) giving rise to a bead (5), characterised in that use is made of a jet of gas (13) consisting of a non-oxidising gas, and in that the flow rate and the angle of incidence of the said jet of gas (13) is regulated in order to form microcraters (6) equipped with a bead (5) over only a part of their periphery.

2. Marking method according to Claim 1, in which the non-oxidising gas is a reducing gas.

3. Marking method according to either of Claims 1 or 2, characterised in that the said jet of gas is oriented in a direction substantially perpendicular to the generatrix of the said roll which passes through the said zone of impact.

4. Marking method according to Claim 3, characterised in that the said gas is injected in the direction of rotation of the roll.

5. Marking method according to any one of Claims 1 to 4, characterised in that a value of between 1 and 5 is given to the ratio L/D between the dimension L of the microcraters, measured along to the periphery of the roll, and their dimension D, measured parallel to the longitudinal axis of the roll.

6. Marking method according to Claim 5, characterised in that the value of the ratio L/D is between 1.1 and 2.5.

7. Marking method according to any one of Claims 1 to 6, characterised in that the said bead as well as the portion of the surface of the roll on which the said bead is deposited is heated to a temperature sufficient to give rise to incipient melting and the welding of the said bead to the said portion of the surface of the roll.

8. Marking method according to Claim 7, characterised in that the said heating is effected by means of a second laser beam (15), in particular by means of a deflected part of the said intermittent laser beam (1).

9. Method for manufacturing a cold-rolled steel sheet, in which a multitude of microcraters is formed in the surface of at least one rolling-mill roll by means of an intermittent laser beam (1) in the presence of a jet of gas (13) directed towards the zone of impact of the said laser beam, each microcrater (6) giving rise to a bead (5), characterised in that use is made of a jet of gas consisting of a non-oxidising gas, in that the flow rate and the angle of incidence of the said jet of gas is regulated in order to form microcraters equipped with a bead over only a part of their periphery, in that the said metal sheet is rolled by means of the said roll, and in that isolated hollows (5'), corresponding to the partial beads (5) of the roll, and plateaus (6'), corresponding to the microcraters (6) of the roll, are formed in the surface of the metal sheet.

**Patentansprüche**

1. Verfahren zur Markierung der Oberfläche eines Walzenzylinders, bei dem man den genannten Zylinder um seine Längsachse dreht und in der Oberfläche (3) des genannten Zylinders mit Hilfe eines intermittierenden Laserstrahls (1) und in Gegenwart eines auf die Auftreffzone des genannten Laserstrahls gerichteten Gasstrahls (13) eine Vielzahl von Mikrokratern bildet, wobei jeder Mikrokrater (6) einen Wulst (5) entstehen läßt, dadurch gekennzeichnet, daß man einen Gasstrahl (13) aus einem nichtoxidierenden Gas verwendet, und daß man die Ausströmmenge und den Einfallwinkel des genannten Gasstrahls (13) so regelt, daß Mikrokrater (6) gebildet werden, die nur auf einem Teil ihrer Peripherie einen Wulst (5) aufweisen.

2. Markierungsverfahren nach Anspruch 1, bei dem das nichtoxidierende Gas ein reduzierendes Gas ist.

12

EP 0 280 671 B1

**3.** Markierungsverfahren nach einem der Ansprüche 1 oder 2, dadurch gekennzeichnet, daß man den genannten Gasstrahl im wesentlichen senkrecht zu der Mantellinie des genannten Zylinders, die durch die genannte Auftreffzone verlaüft, ausrichtet.

**4.** Markierungsverfahren nach Anspruch 3, dadurch gekennzeichnet, daß man das genannte Gas in der Richtung der Zylinderdrehung aufbläst.

**5.** Markierungsverfahren nach einem der Ansprüche 1 bis 4, dadurch gekennzeichnet, daß man dem Verhältnis L/D zwischen der Größe L der Mikrokrater, gemessen entsprechend dem Zylinderumfang, und ihrer Größe D, gemessen parallel zur Längsachse des Zylinders, einen Wert zwischen 1 und 5 gibt.

**6.** Markierungsverfahren nach Anspruch 5, dadurch gekennzeichnet, daß der Wert des Verhältnisses L/D zwischen 1,1 und 2,5 liegt.

**7.** Markierungsverfahren nach einem der Ansprüche 1 bis 6, dadurch gekennzeichnet, daß man den genannten Wulst und den Bereich der Zylinderoberfläche, auf dem der genannte Wulst lagert, auf eine Temperatur erhitzt, die hoch genug ist, um ein Anschmelzen und das Verschweißen des genannten Wulstes mit dem genannten Bereich der Zylinderoberfläche hervorzurufen.

**8.** Markierungsverfahren nach Anspruch 7, dadurch gekennzeichnet, daß man das genannte Erhitzen mit Hilfe eines zweiten Laserstrahls (15), insbesondere mit Hilfe eines abgelenkten Teilstrahls des genannten intermittierenden Laserstrahls (1), vornimmt.

**9.** Verfahren zur Herstellung eines kaltgewalzten Stahlbleches, bei dem man in der Oberfläche mindestens eines Walzenzylinders mit Hilfe eines intermittierenden Laserstrahls (1) in Gegenwart eines auf die Auftreffzone des genannten Laserstrahls gerichteten Gasstrahls (13) eine Vielzahl von Mikrokratern bildet, wobei jeder Mikrokrater (6) einen Wulst (5) entstehen läßt, dadurch gekennzeichnet, daß man einen Gasstrahl aus einem nichtoxidierenden Gas verwendet, daß man die Ausströmmenge und den Einfallwinkel des genannten Gasstrahls so regelt, daß Mikrokrater gebildet werden, die nur auf einem Teil ihrer Peripherie einen Wulst aufweisen, daß man das genannte Blech mit Hilfe des genannten Zylinders walzt und daß man in der Oberfläche des Bleches einzelne, den Teilwülsten (5) des Zylinders entsprechende Vertiefungen (5') und den Mikrokratern (6) des Zylinders entsprechende Plateaus (6') bildet.

13

FIG.1

FIG. 1a

Fig. 2

FIG. 3

FIG.5

FIG.6

FIG. 7

FIG. 8

Fig. 4

FIG. 9

FIG.**10**

FIG.**11**